# EUROPÄISCHE PATENTANMELDUNG

(11) **EP 1 608 171 A1**
(43) Veröffentlichungstag der Anmeldung: **21.12.2005**
(21) Anmeldenummer: 05009260.0
(22) Anmeldetag: 27.04.2005
(51) Int. Cl.: H04N 7/16, A63J 23/02, E04H 3/22, G03B 31/06, G03B 21/00, H04N 5/74

(54) **Decoder für codierte digitale Datenströme und Verfahren zum Liefern digitaler Filme zur Aufführung**

(30) Priorität: 18.06.2004 DE 102004029451
(71) Anmelder: Rohrseitz, Gert, 90513 Zirndorf (DE)
(72) Erfinder: Kummeth, Richard, 82418 Murnau (DE); Korneder, Johann Anton, 81827 München (DE)
(74) Vertreter: Neidl-Stippler, Cornelia

(57) **Zusammenfassung**

Die Erfindung betrifft einen Decoder (1) für codierte digitale Datenströme mit Bilddaten, Audiodaten und Steuerdaten für Filmvorführungen, insbesondere in Kinos, gekennzeichnet durch:
- eine Empfangseinrichtung für einen codierten Datenstrom (11);
- eine Einrichtung zur Aufteilung des Datenstroms in Audio-, Bild- Steuer- und sonstige Daten und Decodierung von Daten; wobei der Bilddatenstrom in Einzelbilder zerlegt wird,
- Übertragungsmittel für die decodierten Bilddaten
- Übertragungsmittel für die Tondaten; und
- Übertragungsmittel für sonstige Daten, wie Steuerdaten, Schaltsignale.

## Beschreibung

Die Erfindung betrifft einen Decoder für codierte digitale Datenströme mit Bilddaten, Audiodaten und Steuerdaten für Filmvorführungen, insbesondere in Kinos sowie ein Verfahren zum Liefern digitaler Filme zur Aufführung, insbesondere an Kinosäle. Sie bezieht sich allgemein auf das Gebiet der Koordination und Steuerung von digitalen Datenströmen zu bildgebenden Einrichtungen, wie digitalen Projektoren und weiteren Kinoeinrichtungen in einem Filmtheater zur Darstellung von Kinofilmen und Werbefilmen.

Obwohl der Erfindung im folgenden anhand von Filmtheatersystemen beschrieben wird, ist sie keineswegs auf dieses begrenzt, sondern kann immer dann angewendet werden, falls digitale Filmdaten decodiert und von mehreren Einrichtungen, wie Tonanlagen und bildgebenden Einrichtungen wiedergegeben werden.

Filmtheatersysteme haben verschiedene Einrichtungen, unter anderem ein 35 mm Filmvorführgerät, nachstehend als analoger Filmprojektor bezeichnet, zur Projizierung eines analogen Films auf eine Kinoleinwand, eine Tonanlage, die Tonsignale vom Filmprojektor nach Auslesen der Audiospur auf dem Film erhält und diese (z B. US 4,385,814) wiedergibt, weitere Anlagen, wie Diaprojektoren, etc. und eine Kinoautomatisierung - das heisst eine einfache Steuereinheit, welche gemäss einem Zeitprogramm verschiedene Einrichtungen des Kinosaals schaltet, wie: Starten des analogen Filmprojektors, Anschalten einer elektrischen Antriebseinheit zum Öffnen und Schliessen des Kinovorhangs, Start einer Hintergrundmusik, Regelung der Helligkeit des Saals etc. und können so Bedienungspersonal, das früher für diese Schritte benötigt wurde, einsparen. Vorführverfahren, die zur Darstellung von Kinofilmen in Filmtheatem Steuervorrichtungen benutzen, sind z.B. aus der DE 23 08 874 bekannt.

In der Regel wird vor Beginn des Hauptfilms ein Vorspannfilm bzw. Werbung gezeigt. Der Vorspannfilm enthält Filmausschnitte neuer Filme, die demnächst in dem Filmtheater gezeigt werden, kann aus einem 35 mm Film bestehen und in Verbindung mit dem Hauptfilm vom gleichen analogen Filmprojektor gezeigt werden. Im Vorspannfilm befinden sich auch Werbefilme welche die verschiedensten Produkte bewerben und dem Filmtheaterbesucher näher bringen. Der Werbefilm kann auch aus einzelnen Werbespots bestehen und ist ebenfalls im 35 mm Filmformat erstellt. Alle Filmabschnitte, Vorspannfilm und Hauptfilm, wurden zu einer grossen Filmrolle zusammengefügt und benötigten somit zur Wiedergabe nur einen Analoger Filmprojektor, der, gemeinsam mit der entsprechenden Steuereinheit, einen automatischen Ablauf einer Filmtheatervorstellung ermöglichte.

Die Nachteile der klassischen analogen Vorführsysteme in Filmtheatem bestehen bspw. für die Werbebranche darin, dass die Systeme, die zur Werbung verwendet werden, statisch sind, das heisst die Aktualisierung der Informationen der in den 35 mm Filmen, Dias oder Videofilmen enthaltenen Werbung ist sehr zeit- und kostenintensiv. Der Kunde wünscht aber häufig eine sehr aktuelle, schnelle Werbeaktion, um gegebenenfalls unerwartet schnell auftretende Auftragsmängel beseitigen zu können, Sonderaktionen anzuzeigen oder dergleichen. Derartige Werbung ist häufig auch nur lokal begrenzt - bspw. Restaurantwerbungen oder aber lokale Ereignisse, wie Volksfeste Die gegenwärtig vorhandenen Werbeanzeigen in Filmtheatern sind daher mit einer Reihe von Problemen behaftet.

Eine Lösung wurde darin gesehen, durch Datenkommunikation via Satellit oder per ISDN im Festnetz die Werbefilmdaten digital an Filmtheater zu senden und so für eine digitale Projektion zeitgerecht zur Verfügung zu stellen. Dadurch können auch kurzfristig auftretende Aufträge zeitgerecht bearbeitet werden, was insbesondere für lokal agierende Werbekunden wichtig ist.

In jedem Kinosaal steht ausser den üblichen Einrichtungen, wie dem analogen Filmprojektor, der Tonanlage und der Kinoautomatisierung mindestens ein digitaler Projektor zur Verfügung. Zum Ansteuern digitaler Projektoren werden Zuspielsysteme benötigt, die in der Lage sind, Daten zum digitalen Projektor zu liefern. Als Zuspielsysteme wurden komplexe Rechner, wie PCs, eingesetzt. Beim Einsatz handelsüblicher Rechnern in Filmtheatem zur Verarbeitung angelieferter digitaler Filmdaten stellt sich das Problem, dass diese teuer sind, Eingriffe Dritter auf die behandelten Daten ermöglichen, hohe Wartungskosten sowie Softwarelizenzen benötigen und aufwendig zu bedienen sind.

Es ist daher Aufgabe der Erfindung, die Verarbeitung von digitalen Datenströmen einfacher und damit kostengünstiger sowie sicherer zu gestalten.

Die Aufgabe wird erfindungsgemäss durch einen Decoder mit den Merkmalen des Patentanspruches 1 und ein Verfahren mit den Merkmalen des Patentanspruches 8 gelöst.
Vorteilhafte Weiterbildungen ergeben sich aus den abhängigen Ansprüchen.

Dadurch, dass nun ein Decoder erfindungsgemäss die von einer externen Datenquelle, wie einem Datenprovider/Kinoserver/Steuereinheit gelieferten Datenströme für die digitale Projektion decodiert und an bildgebende Einrichtungen, die Tonanlage und andere Anlagen, die Kinoautomatisierung etc. aufteilt, kann erreicht werden, dass niemand in die übermittelten Datenströme eingreifen kann, diese nicht kopiert werden können. Die Decoder können preiswert und wenig störanfällig gestaltet werden, da sie keine beweglichen Teile aufweisen, praktisch wartungsfrei sind und keine Softwarelizenzen benötigen.

Es ist vorteilhaft, wenn der Decoder eine Einrichtung aufweist, welche die Bilder des Bilddatenstroms in Echtzeit entsprechend dem von der Bilddarstellungseinrichtung geforderten Ausgabeformat skaliert.

Die Codierung der ankommenden Daten kann ein übliches Datenformat aufweisen, wie MPEG2, MPEG4, WMV etc. Dabei wird unter Codierung im Zusammenhang dieser Anmeldung sowohl die Datenkompresssion für den Datentransport als auch die Verschlüsselung der Daten verstanden.

Es wird darauf hingewiesen, dass nicht alle Daten des Datenstroms in gleicher Weise codiert sein müssen - bei Steuerdaten kann z.B. auf eine aufwendige Codierung verzichtet werden. Der Decoder kann diese Daten aufgrund der von ihm durchgeführten Aufteilung der Daten unterschiedlich decodieren.

Die zu transportierenden Steuerdaten können Daten zum Ansteuern einer Abblendeinrichtung für einen Projektor sowie anderer Geräte, aber auch Schaltdaten für eine Kinoautomatisierung umfassen.

Als Bilddarstellungsgerät können je nach Grösse des Filmvorführraumes bspw. Bildschirme, auch LCD, oder digitale Projektoren eingesetzt werden.

Das Verfahren zum Vorlegen der Filmdaten als Bilddaten, Tondaten, Steuerdaten und sonstigen Daten umfasst: Codieren der Daten und Ausbilden eines codierten Filmdatenstroms daraus; und Übermitteln des codierten Filmdatenstroms an den Decoder; Auftrennen und Decodieren des codierten Filmdatenstroms durch den Decoder; und Übertragen der aufgetrennten Daten an entsprechende Endgeräte, wie Tondaten an eine Tonanlage, Bilddaten an eine bildgebende Einrichtung, Steuerdaten an eine Kinomatrix, sowie weitere Anlagen des Aufführungsraumes.

Die digitalen Daten können bspw. Medienwerbung in Filmtheatem sein, wie Werbetrailer, Werbespots, Werbeclips und Vorspann- Kinofilme, die eine digitale Technik-Kette durchlaufen haben, aber auch sonstige digitale Filme. Die digitale Kette beginnt mit der professionellen Herstellung der Medienwerbung bei bewegten Bildern, beispielsweise mit Hilfe von digitalen Camcordern oder bei Einzelbildem mit Hilfe von Digitalkameras, dazu stehen verschiedene Aufzeichnungsformate zur Verfügung. Auch analoge Videoaufnahmen und Filmaufnahmen im Broadcastformat können durch Abtastung, digitalisiert durch Sampling von Ton und Bild, der Postproduktion zugeführt werden.

Nach der digitalen Audio- und Video- Bearbeitung erfolgt die Produktion und Codierung der unkomprimierten Video- und Audiodatenströme nach einem definierten Algorithmus, um die entstandene Datenmenge zu reduzieren.

Es werden Kompressions- und Verschlüsselungsverfahren verwendet. Den fertig gestellten komprimierten digitalen Bild- und Tonsequenzen werden Schaltinformationen zugeordnet und die gesamten Daten anschliessend - bspw. in einem sog. Multiplexer - in einen versendefähigen Filmdatenstrom umgewandelt und übermittelt.

Das Versenden (Point - to - Multipoint) der codierten digitalen Bild- und Tonsequenzen und weiterer Daten, wie Steuerdaten, an den Decoder kann über entsprechende Schnittstellen für Daten und Telekommunikation erfolgen, beispielsweise per DFÜ über Datennetz oder via Satellit oder übers Internet - gegebenenfalls über mindestens eine/n zwischengeschaltete/n Datenprovider/Kinoserver/Steuereinheit. Die digitale Informationen enthaltenden Dateien können so auch gleichzeitig an mehrere, an verschiedenen Orten gelegene Steuerzentren/Kinoserver/Datenprovider gesendet werden.

Da die digitalen Werbeinformationen als codierte Daten vorliegen, werden in allen Bereichen nur geringe Ressourcen (Bandbreite der Übermittlung, Transportkosten, Transportgeschwindigkeit, Decoderleistung) benötigt und somit können auch für eine Vielzahl von digitalen Projektoren die unterschiedlichsten digitalen Informationen als Bild- und Tonsequenzen für die Medienwerbung schnell übermittelt werden.

Der Decoder teilt den Datenstrom in Teile auf (z.B. Video, Audio, Untertitel, Duftsteuerung, Beleuchtungseffekte). Im Decoder werden dabei im Datenstrom enthaltenen Informationen gemäss dem jeweiligen Codec entschlüsselt, dekomprimiert, nach Bild-, Audio- und weiteren Daten, wie Steuer und/oder Schaltdaten, getrennt und gezielt an die jeweiliegen Empfänger, wie den digitalen Projektor, die Tonanlage und sonstige Anlagen übermittelt.

Wichtig ist auch die Ansteuerung einer im Strahlengang des digitalen Projektors angeordnete Abblendeinrichtung, die beispielsweise aus einer steuerbaren Blende, einer mechanischen Klappe, einem gesteuert bewegbaren Graukeill einem schwenkbaren Spiegel bestehen kann, durch den Decoder. Diese Abblendeinrichtung kann den Strahlengang des digitalen Projektors unterbrechen oder freigeben und vom Decoder entsprechend einem im Datenstrom enthaltenen Signal betrieben werden.

Ein Ausführungsbeispiel der Erfindung ist in den Zeichnungen rein schematisch dargestellt und wird nachfolgend näher beschrieben. Es zeigt
- Fig. 1: eine schematische Darstellung des Einsatzes eines erfindungsgemässen Decoders in einem Kinosaal, und
- Fig. 2: ein Blockdiagramm eines erfindungsgemässen Verfahrens

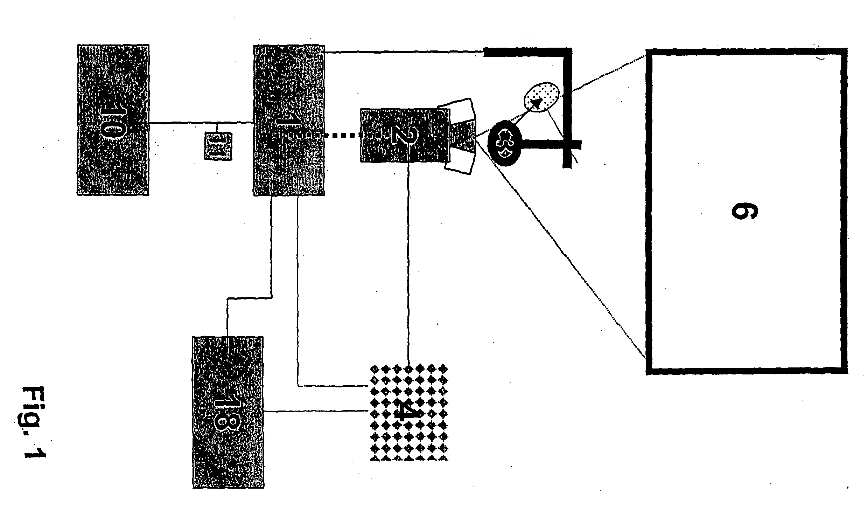

Fig.1 zeigt schematisch den Einsatz des Decoders 1 gemeinsam mit einer Kinoautomatisierung 4 zum Steuern einer Kombination aus analogen und digitalen Einrichtungen in einem Kinosaal.

Dieses Filmvorführsystem umfasst eine Kinoautomatisierung 4 zum Steuern einer Kombination aus analogen und digitalen bildgebenden Einrichtungen, mit mindestens einem digitalen Projektor 2 , einer Abblendeinrichtung 3, einer Tonanlage 18, Saalbeleuchtung 13 und weiteren Anlagen, wie Vorhangantrieb, Kinosaalbeleuchtung etc. Die Kinoautomatisierung 4 umfasst eine elektronische Schaltung, die ein fest abgespeichertes starres Kinoautomatisierungsteuerprogramm dazu verwendet, in zeitlich vorbestimmter Abfolge die Abblendeinrichtung 3, den digitalen Projektor 2 und den Decoder 1 sowie weitere Vorrichtungen sowie die Tonanlage 18 nach einem vorbestimmten Zeitprogramm an- und abzuschalten. Sie kann aber auch die hier nicht dargestellte Saalbeleuchtung, Vorhänge, Beduftungsanlagen oder einen analogen Hauptfilmprojektor nach dem Programm schalten und Tonanlagen bspw. Tonkanalverteilung oder aber -Lautstärke steuern.

Die Kinoautomatisierung 4 kann nach Durchführung der üblichen aus dem Stand der Technik bekannten Vorarbeiten durch den Filmvorführer, beispielsweise das Zusammenfügen der einzelnen Filmrollen und das Bestücken der Filmzuführeinrichtung, die Kinovorstellungen vollautomatisch ablaufen lassen.

Die Abblendeinrichtung 3, die den Strahlengang vor dem Objektiv des digitalen Projektors 2 unterbrechen kann, ist bei der dargestellten Ausführungsform eine Klappe, die den Strahlengang des digitalen Projektors 2 durch Schliessen unterbricht oder freigibt und somit die Projektion des digitalen Projektors, bspw. den Werbetrailer, zur Projizierung auf die Kinoleinwand 6 freigibt.

Der Decoder 1 ist mit Mitteln ausgestattet, um digitale Daten zu empfangen, die mit ihm verbundenen Vorrichtungen und Einrichtungen mit durch ihn bearbeiteten Daten zu versorgen bzw. decodierte Steuersignale weiterzugeben. Insbesondere erkennt er entsprechende Signale im Datenstrom und übermittelt diese und an die Kinoautomatisierung, die das Ein- und Ausschalten von Geräten steuert.

Bspw. wird dem Decoder 1 ein codierter Datenstrom 11 übermittelt, er decodiert diesen und übermittelt die Bilddaten des Datenstroms an den digitalen Projektor 2, die Audio-Daten an eine Tonanlage 18. Die Kinoautomatisierung 4, der digitale Projektor 2 und die Abblendeinrichtung 3 sind mit dem Decoder 1 verbunden. Die Kinoautomatisierung 4 wird auch zum An- und Abschalten des mindestens einen digitalen Projektors 2, sowie des Decoders 1 benötigt. Der Decoder 1 bewirkt hier auch die Steuerung mindestens einer Abblendeinrichtung 3.

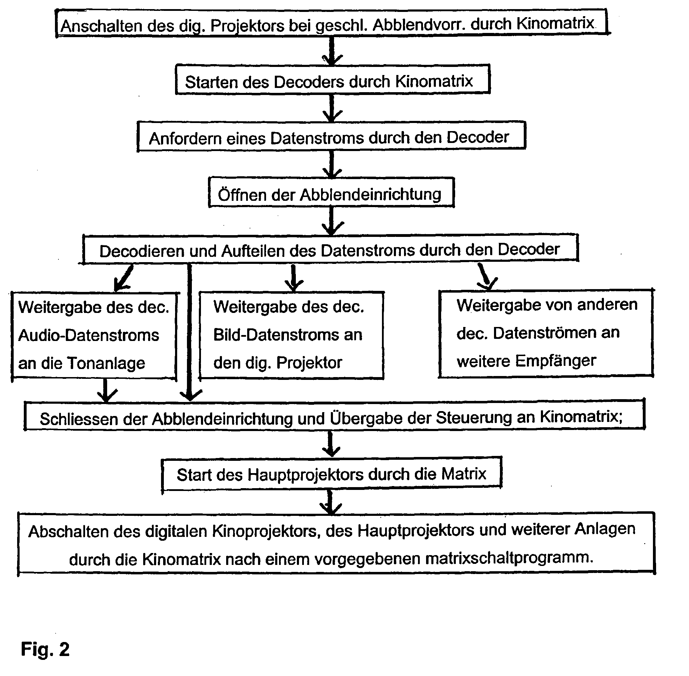

Beispielhaft wird nachstehend ein vollautomatischer Ablauf einer Filmtheatervorstellung mit dem erfindungsgemässen Decoder 1, einem analogen Kinohauptprojektor, einer Kinoautomatisierung 4 und einem digitalen Projektor 2 anhand Fig. 2 beschrieben.

Die Kinoautomatisierung 4 schaltet nach dem fest installierten Kinoautomatisierungzeitprogramm den digitalen Projektor 2 an. Während der Aufwärmphase erhält der digitale Projektor 2 noch keine Signale vom Decoder 1, projiziert aber bereits das vom Hersteller der Geräte fest hinterlegte Standbild, dessen Projektion auf die Kinoleinwand 6 durch die geschlossene Abblendeinrichtung 3 aber verhindert wird. Der Decoder 1 schliesst die Abblendeinrichtung 3, falls diese geöffnet ist. Die Abblendeinrichtung 3 wird steuerungstechnisch dahingehend überprüft, ob der Strahlengang des digitalen Projektors 2 unterbrochen ist oder nicht. Ist der Strahlengang nicht unterbrochen, erhält die Abblendeinrichtung 3 vom Decoder 1 das Signal, den Strahlengang zu unterbrechen.

Zu in der Steuersoftware hinterlegten Zeiten wird über die Kinoautomatisierung 4 der Decoder 1, der Kinohauptprojektor und die Tonanlage 10 angeschaltet, sowie der Vorhang und die Saalbeleuchtung angesteuert. Die Leuchtstärke der Saalbeleuchtung wird reduziert und der Vorhang vor der Kinoleinwand 6 geöffnet.

Der Decoder 1 wird jetzt von der Kinoautomatisierung 4 veranlasst, einen Datenstrom 11 anzufordem. Dieser wird dem Decoder 1 vom Datenprovider/Kinoserver/Steuereinheit 10 übermittelt. Der Decoder 1 decodiert und trennt den Datenstrom in verschiedene Signalströme auf - den Audiodatenstrom, den Bilddatenstrom, gegebenenfalls Schaltdaten, bspw. für die Klappe. Die digitalen Filmdaten können nun an den digitalen Projektor geliefert werden. Gleichzeitig erhält die Abblendeinrichtung 3 das Steuersignal, den Strahlengang freizugeben und Projektion auf die Kinoleinwand 6 zu ermöglichen.

Gleichzeitig werden die Tondaten des Datenstroms auf die Tonanlage 10 geliefert und die digitale Vorführung beginnt. Nach Abschluss des ersten Werbeprogramms können nach bestimmten Vorfilmen weitere, auch analoge Filme folgen - je nach dem wird der digitale Projektor 2 weiter betrieben und nach Ende einer vorabgespeicherten Betriebszeit abgeschaltet - entsprechende Signale befinden sich im Datenstrom 11, werden vom Decoder 1 erkannt und an die Kinoautomatisierung 4, die das Ein- und Ausschalten von Geräten steuert, übermittelt.

In dieser Abfolge können auch andere Anlagen, parallel zum Geschehen im/ Botschaft des (Werbe-)films, über vom Decoder 1 übermittelte Datenströme über die Kinoautomatisierung 4 oder aber auch direkt gesteuert werden.

Selbstverständlich ist die Erfindung nicht auf die Anzahl der dargestellten Einheiten begrenzt, sondern es können auch mehr digitale und oder analoge Projektoren, Tonanlagen etc. angeschlossen und gesteuert werden.

Dem Fachmann ist offensichtlich, dass die Erfindung keineswegs auf die erläuterten Ausführungsbeispiele eingeschränkt ist, sondern lediglich durch den Schutzumfang der beigefügten Ansprüche.

## Patentansprüche

1. Decoder (1) für codierte digitale Datenströme mit Bilddaten, Audiodaten und Steuerdaten für Filmvorführungen, insbesondere in Kinos, **gekennzeichnet durch**:
- eine Empfangseinrichtung für einen codierten Datenstrom (11);
- eine Einrichtung zur Aufteilung des Datenstroms in Audio-, Bild- Steuer- und sonstige Daten und Decodierung von Daten; wobei der Bilddatenstrom in Einzelbilder zerlegt wird,
- Übertragungsmittel für die decodierten Bilddaten
- Übertragungsmittel für die Tondaten; und
- Übertragungsmittel für sonstige Daten, wie Steuerdaten, Schaltsignale.

2. Decoder nach Anspruch 1, **dadurch gekennzeichnet, dass** er eine Einrichtung aufweist, welche die Bilder des Bilddatenstroms in Echtzeit entsprechend dem von der digitalen bildgebenden Einrichtung geforderten Ausgabeformat skaliert.

3. Decoder nach einem der vorangehenden Ansprüche, **dadurch gekennzeichnet, dass** die Codierung der Daten ausgewählt ist aus MPEG2, MPEG4, WMV etc.

4. Decoder nach einem der vorangehenden Ansprüche, **dadurch gekennzeichnet, dass** die Steuerdaten Daten zum Ansteuern einer Abblendvorrichtung (3) für einen digitalen Projektor (2) umfassen.

5. Decoder nach einem der vorangehenden Ansprüche, **dadurch gekennzeichnet, dass** die Steuerdaten Daten zum Ansteuern einer Parfümiereinrichtung umfassen.

6. Decoder nach einem der vorangehenden Ansprüche, **dadurch gekennzeichnet, dass** die Steuerdaten Daten für eine Kinoautomatisierung (4) umfassen..

7. Decoder nach einem der vorangehenden Ansprüche, **dadurch gekennzeichnet, dass** die bildgebende Einrichtung ein Bildschirm oder ein digitaler Projektor (2) ist.

8. Verfahren zum Liefern digitaler Filme zur Aufführung, insbesondere an Kinosäle, **gekennzeichnet durch**:
- Vorlegen von Filmdaten als Bilddaten, Tondaten, Steuerdaten und sonstige Daten;
- Codieren mindestens eines Teils der Daten und Ausbilden eines codierten Filmdatenstroms daraus; und
- Übermitteln des codierten Filmdatenstroms an einen Decoder nach einem der Ansprüche 1 bis 5;
- Auftrennen und Decodieren des codierten Filmdatenstroms **durch** den Decoder; und
- Übertragen der aufgetrennten decodierten Daten an entsprechende Endgeräte, wie Tondaten an eine Tonanlage, Bilddaten an eine bildgebende Einrichtung, Steuerdaten an eine Kinomatrix, od. dgl.
